# DEMANDE DE BREVET EUROPEEN

(11) **EP 0 764 843 A2**
(43) Date de publication de la demande: **26.03.1997**
(21) Numéro de dépôt: 96202545.8
(22) Date de dépôt: 12.09.1996
(51) Int. Cl.: G01N 21/35

(54) **Procédé et dispositif de contrôle de la qualité de latex de polyméres vinyliques halogénés**

(30) Priorité: 25.09.1995 BE 9500784
(71) Demandeur: SOLVAY (Société Anonyme), B-1050 Bruxelles (BE)
(72) Inventeur: Josephy, Claude, 1800 Vilvoorde (BE); Breyer, Pol, 1853 Grimbergen (BE)
(74) Mandataire: Marckx, Frieda

(57) **Abrégé**

Procédé de contrôle de la qualité de latex de polyméres vinyliques halogénés en cours de polymérisation en émulsion aqueuse dans lequel on émet un rayonnement lumineux directement dans l'émulsion aqueuse, on capte et on transmet à un spectrophotomètre proche infrarouge la lumière diffuse réfléchie par les particules polymériques du latex dans la bande spectrale située entre 1100 et 2500 nm et on la mesure à des longueurs d'onde spécifiques reliées par des équations de corrélation à des propriétés spécifiques du latex contrôlé.

Dispositif pour le contrôle de la qualité de latex dans un réacteur en cours de polymérisation comprenant essentiellement une sonde de mesure disposée dans le réacteur, une liaison optique de ladite sonde avec un spectrophotomètre proche infrarouge pourvu de moyens pour émettre de la lumière et pour capter la lumière diffuse réfléchie et d'un ordinateur ayant en mémoire les équations de corrélation.

## Description

La présente invention concerne un procédé de contrôle de la qualité de latex de polymères vinyliques halogénés. Elle concerne plus particulièrement un procédé de contrôle de la qualité de latex de tels polymères au cours de la polymérisation radicalaire en émulsion aqueuse de monomères vinyliques halogénés. Elle concerne également un dispositif pour le contrôle de la qualité des émulsions aqueuses.

La polymérisation radicalaire en émulsion aqueuse mettant en oeuvre typiquement, outre un milieu aqueux de polymérisation, des agents émulsionnants et des initiateurs radicalaires constitue une technique de polymérisation particulièrement bien adaptée à la fabrication d'émulsions aqueuses de polymères vinyliques halogénés, usuellement appelées latex, tels que par exemple des latex de polychlorure de vinyle ou de copolymères du chlorure de vinylidène. Les latex ainsi produits contiennent in fine des particules polymériques élémentaires présentant des diamètres moyens très faibles pouvant aller d'environ 10 à environ 4000 nm (nanomètres). Pour certaines applications, telles que par exemple dans le domaine des peintures ou des enduits en général, ces latex trouvent directement application sans séparation préalable des polymères de leur milieu de polymérisation. Dans d'autres applications, telles que par exemple les plastisols à base de PVC, les polymères sont isolés de leur milieu de polymérisation et séchés avant mise en oeuvre. Dans tous les cas, la qualité des produits façonnés est tributaire, notamment, du diamètre moyen des particules élémentaires polymériques du latex et de la distribution des diamètres des particules. C'est pourquoi il s'est avéré souhaitable de disposer d'un procédé de contrôle efficace et rapide de la qualité des latex en cours de la polymérisation en émulsion aqueuse afin de pouvoir assurer une reproductibilité très élevée de la qualité des latex et des polymères produits. Le contrôle du déroulement d'une polymérisation, par le biais de mesures reflétant des propriétés du polymère en formation, permet en effet de réguler les conditions de polymérisation de manière à produire des polymères ayant des propriétés prédéterminées avec une reproductibilité améliorée.

On a déjà proposé de contrôler des propriétés caractérisant la structure moléculaire de polymères, telles que l'indice de viscosité ou la densité des polymères, par le biais de la mesure du spectre d'absorption dans la région du proche infra-rouge (ci-après "NIR") sur des échantillons de polymères prélevés en cours de polymérisation et préalablement débarrassés de leur milieu de polymérisation et, en particulier, sur des polymères d'oléfines en poudre (demande de brevet EP-A- 0 328 826). Le procédé en cause permet une régulation de la polymérisation en agissant sur les conditions de la polymérisation lorsqu'apparaît un écart prédéterminé entre les propriétés mesurées sur le polymère isolé et celles que l'on souhaite atteindre. Néanmoins, le procédé selon le document EP-A 0 328 826 nécessite la prise et l'analyse régulière d'échantillons de polymère séparé préalablement de son milieu de polymérisation et n'est donc pas adapté à un contrôle "in situ" en cours de polymérisation.

On a par ailleurs décrit la mesure (en vue d'un étalonnage) de la transflectance spectrale dans la région du proche infra-rouge, allant de 900 à 1200 nm, sur la lumière transmise au travers de latex de copolymères de styrène et d'acrylate de méthyle, à 30 % en poids de matières sèches, contenant des particules polymériques dont le diamètre moyen s'élève à environ 60 à 80 nm (Paul D. Gossen et al., Applied Spectroscopy, Vol. 47, N° 11, 1993, pp. 1852-1870). Ces mesures ont permis d'établir certaines corrélations entre la transflectance à des longueurs d'onde spécifiques et certaines propriétés des latex de copolymères de styrène et d'acrylate de méthyle, telles que le diamètre moyen des particules et la teneur en matières solides des latex. Toutefois, cette technique d'étalonnage "off line" sur la lumière transmise au travers du latex est décrite comme ne convenant pas pour des latex contenant des particules polymériques dont les diamètres moyens s'élèvent à environ 150 à 200 nm (et plus). Elle n'est donc pas transposable au contrôle de latex industriels dont la concentration peut dépasser 50 % en fin de polymérisation, ni à la détermination des diamètres moyens et plus généralement de la distribution des diamètres des particules polymériques dans des émulsions aqueuses constituées d'une ou de plusieurs familles de particules dont le diamètre moyen final est généralement supérieur à environ 200 nm.

La présente invention vise à procurer un procédé de contrôle de la qualité de latex de polymères vinyliques halogénés qui ne présente aucun des inconvénients précités.

A cet effet, l'invention concerne un procédé de contrôle de la qualité de latex de polymères vinyliques halogénés en cours de polymérisation radicalaire en émulsion aqueuse de monomères vinyliques halogénés, caractérisé en ce qu'on émet dans l'émulsion aqueuse un rayonnement lumineux, on capte et on transmet à un spectrophotomètre proche infrarouge la lumière diffuse réfléchie par les particules polymériques du latex dans la bande spectrale située entre 1100 et 2500 nm, on mesure la lumière diffuse réfléchie à certaines longueurs d'onde spécifiques situées dans cette bande spectrale et corrélées avec des propriétés spécifiques du latex à l'aide d'équations de corrélation stockées dans une mémoire, on introduit les valeurs mesurées dans ladite mémoire et on calcule la propriété spécifique contrôlée.

Les longueurs d'onde choisies pour effectuer la corrélation entre la lumière diffuse réfléchie (appelée ci-après brièvement "réflectance") et une propriété spécifique d'un latex de polymère seront généralement fonction des conditions de polymérisation, de la nature du latex et du polymère vinylique halogéné. Elles devront donc être déterminées au préalable par voie expérimentale. Avantageusement, cet étalonnage s'effectue par analyse statistique sur un grand nombre d'échantillons de latex. L'établissement des équations de corrélation s'effectue avantageusement par régression statistique. Les équations de corrélation peuvent alors être introduites dans la mémoire d' un ordinateur, couplé au spectrophotomètre, ou dans le spectrophotomètre lui-même, et les propriétés calculées directement.

A titre d'exemples non limitatifs de qualités du latex qui peuvent être contrôlées en cours de polymérisation selon le procédé de l'invention, on peut citer le diamètre moyen des particules, la teneur totale en matières sèches et donc le taux de conversion (ou taux d'avancement de la réaction de polymérisation), la distribution du diamètre des particules (par familles) et donc la détection de différentes familles de particules ou encore la surface totale des particules.

A titre d'exemples de longueurs d'onde corrélées par régression statistique avec des propriétés spécifiques d'un latex d'homopolymère du chlorure de vinyle par exemple, on peut mentionner :
- pour la teneur totale en matières sèches :
   1602, 1610, 1692, 1714, 1886, 2394 nm
- pour le diamètre moyen des particules :
   1332, 1382, 1390, 1816, 2102, 2180 nm
- pour la famille de particules de diamètre de 500 à 900 nm :
   1394, 1402, 1410, 2094, 2488 nm
- pour la surface totale des particules :
   1190, 1198, 1206, 1282, 1404, 2230 nm

La mesure de la lumière diffuse réfléchie (réflectance) à des longueurs d'onde spécifiques s'effectue généralement au moins un certain nombre de fois en cours de polymérisation; par exemple au moins vers le début de la polymérisation en vue de suivre l'initiation et en fin de polymérisation en vue de vérifier le taux de conversion avant dégazage du réacteur.

Suivant un mode de réalisation particulier du procédé de l'invention, le contrôle de la qualité du latex de polymère vinylique halogéné s'effectue sur un échantillon d'émulsion aqueuse prélevé en cours de polymérisation. Ce prélèvement d'échantillon peut par exemple s'effectuer dans un "by-pass" situé sur le réacteur de polymérisation.

Suivant un autre mode particulier de réalisation auquel on donne la préférence, le procédé de contrôle selon l'invention s'effectue sur l'émulsion aqueuse directement dans le réacteur de polymérisation. Dans ce mode de réalisation préféré, aucune prise d'échantillon de latex n'est nécessaire et la réponse à toute déviation d'une propriété par rapport à une valeur préétablie est encore plus rapide. En outre, ce mode de réalisation présente l'avantage de permettre un contrôle continu de la qualité des latex en cours de polymérisation.

Par monomère vinylique halogéné, on entend désigner aux fins de la présente invention tout monomère polymérisable par voie radicalaire possédant une insaturation oléfinique terminale et substitué par au moins un atome d'halogène. De préférence, ces monomères sont choisis parmi les dérivés substitués de l'éthylène et du propylène et ne comportent que deux ou trois atomes de carbone respectivement. De préférence, les atomes d'halogène sont choisis parmi les atomes de chlore et de fluor. A titre d'exemples non limitatifs de pareils monomères, on peut citer le chlorure de vinyle, le bromure de vinyle, le fluorure de vinyle, le chlorure de vinylidène, le fluorure de vinylidène, le chlorotrifluoroéthylène, le tétrafluoréthylène et l'hexafluorpropylène. L'invention est particulièrement adaptée au contrôle de la polymérisation radicalaire en émulsion aqueuse du chlorure de vinyle, du chlorure de vinylidène et du fluorure de vinylidène.

Par polymérisation, on entend désigner aux fins de la présente invention aussi bien l'homopolymérisation des monomères vinyliques halogénés que leur copolymérisation entre eux ou avec d'autres monomères copolymérisables avec eux. A titre d'exemples de ces derniers, on peut citer les esters vinyliques, tels que l'acétate de vinyle, les esters acryliques tels que l'acrylate de méthyle et le méthacrylate de méthyle, les nitriles insaturés, tels que l'acrylonitrile et le méthacrylonitrile, les esters allyliques tels que l'acétate d'allyle, les dérivés styréniques et les alpha-oléfines, telles que l'éthylène et le propylène. Toutefois, l'invention s'applique de préférence au contrôle de latex de polymères contenant au moins 50 % molaires et de préférence, au moins 80 % molaires d'unités dérivées de monomères vinyliques halogénés. Elle s'applique particulièrement au contrôle de la qualité de latex de polymères du chlorure de vinyle, plus spécialement d'homopolymères du chlorure de vinyle, de copolymères du chlorure de vinylidène et de polymères, homo- et copolymères, du fluorure de vinylidène.

A titre d'exemples non limitatifs de copolymères du chlorure de vinylidène, on peut mentionner les copolymères contenant environ 70 à 96 % en poids de chlorure de vinylidène, le solde étant constitué essentiellement d'acrylates d'alkyles, tels que l'acrylate de méthyle, ou encore de chlorure de vinyle

A titre d'exemples non limitatifs de copolymères du fluorure de vinylidène, on peut mentionner les copolymères avec le chlorotrifluoréthylène ou avec l'hexafluorpropylène contenant au moins 75 % en poids de fluorure de vinylidène.

Par polymérisation radicalaire en émulsion aqueuse, on entend désigner aux fins de la présente invention tout procédé de polymérisation radicalaire s'effectuant en milieu aqueux en présence d'agents émulsionnants et d'initiateurs radicalaires. Cette définition englobe spécifiquement la polymérisation en émulsion aqueuse dite "classique" dans laquelle on met en oeuvre des initiateurs radicalaires hydrosolubles, ainsi que la polymérisation en microsuspension, encore appelée en dispersion aqueuse homogénéisée, dans laquelle on met en oeuvre des initiateurs oléosolubles et on réalise une émulsion de gouttelettes de monomères grâce à une agitation mécanique puissante et la présence d'agents émulsionnants.

La nature des agents émulsionnants et des initiateurs, hydro-et oléosolubles, n'est pas critique. Le procédé de contrôle selon l'invention s'applique donc à tout procédé de polymérisation radicalaire en émulsion aqueuse de monomères vinyliques halogénés en présence des initiateurs et des agents émulsionnants usuels de ce type de polymérisation. Il est particulièrement adapté au contrôle de la polymérisation en émulsion aqueuse "classique" mettant en oeuvre des agents émulsionnants et des initiateurs hydrosolubles.

Le procédé selon l'invention présente l'avantage de permettre le suivi de la qualité des latex, tel que par exemple le suivi du taux de conversion et/ou de la dimension moyenne des particules polymériques, au cours de toute la durée de la polymérisation, c'est-à-dire tant pour les taux de conversion bas (début de la polymérisation) lorsque le latex est pauvre en matières solides et ne contient que des particules de très faible dimension que pour des taux de conversion élevés (fin de polymérisation) lorsque le latex est riche en matières solides (plusieurs dizaines de %) et contient notamment des particules de diamètre élevé.

Le procédé selon l'invention présente également l'avantage appréciable de permettre la mesure directe en cours de polymérisation de certaines propriétés du latex sans séparation préalable du polymère de son milieu de polymérisation (l'eau en l'occurence). De ce fait, il permet une réponse très rapide en cas de déviation d'une propriété du latex par rapport à une valeur préétablie, c'est-à-dire une intervention rapide en cas de besoin sur les paramètres de la polymérisation ayant une influence sur la propriété "déviée" et donc une régulation de la polymérisation capable de garantir une reproductibilité très élevée de la qualité des latex produits. A titre d'exemples non limitatifs de paramètres bien connus de l'homme du métier qui ont une influence sur les propriétés des latex de polymères en cours de polymérisation, on peut mentionner la température de polymérisation, la vitesse d'agitation du milieu de polymérisation, le programme d'injection des réactifs, tels que l'émulsionnant et l'initiateur ou encore l'introduction en cours de polymérisation d'un ou de plusieurs autres latex de polymère.

L'invention concerne également un dispositif pour le contrôle de la qualité de latex de polymères vinyliques halogénés dans un réacteur en cours de polymérisation.

Le dispositif selon l'invention consiste essentiellement en une sonde de mesure disposée dans le réacteur, une liaison optique entre ladite sonde et un spectrophotomètre proche infra-rouge situé à l'extérieur du réacteur, ledit spectrophotomètre étant pourvu de moyens pour émettre un rayonnement lumineux et pour capter la lumière diffuse réfléchie dans la bande spectrale située entre 1100 et 2500 nm et d'un ordinateur ayant en mémoire les équations établissant une corrélation entre la valeur de la lumière diffuse réfléchie à des longueurs d'onde spécifiques et des propriétés spécifiques du latex.

Des sondes de mesure de ce type, dites "sondes NIR" peuvent être trouvées dans la commerce. La liaison optique entre la sonde de mesure et le spectrophotomètre proche infrarouge se fait avantageusement au moyen de fibres optiques.

Il est recommandé de disposer la sonde de mesure dans le fond du réacteur et, par ailleurs, de la disposer au-dessus de l'agitateur tout en veillant à ce qu'elle soit positionnée de telle sorte qu'elle soit noyée en début de polymérisation (c'est-à-dire lorsque le réacteur contient l'entièreté de la charge de polymérisation). Dans ces conditions, les mesures de contrôle effectuées sont représentatives de la qualité des latex.

Il est entendu que la sonde disposée dans le réacteur devra être capable de résister aux pressions élevées développées en cours de polymérisation et aux dépressions appliquées avant polymérisation en vue d'éliminer l'oxygène du réacteur. Il est également entendu que la sonde devra être parfaitement étanche afin d'exclure toute fuite de monomère gazeux.

A cet effet, il est recommandé d'utiliser une sonde pourvue de deux barrières étanches: une première barrière étanche côté réacteur, par exemple une vitre en saphir, et une seconde barrière étanche côté extérieur, par exemple un joint de type O-ring, et de maintenir l'intérieur de la sonde sous une pression fixée d'un gaz neutre.

Le contrôle de cette pression permettra de détecter une défaillance de la barrière côté réacteur par une élévation de la pression au cours de la polymérisation (ou une chute de pression pendant la phase de mise sous vide) et une défaillance de la barrière coté extérieur par une chute de pression.

Afin d'assurer une sécurité maximale et de pouvoir détecter le défaut éventuel simultané des deux barrières étanches, on peut également prévoir un détecteur de monomère, par exemple de chlorure de vinyle, à l'endroit où la sonde pénètre dans le réacteur de polymérisation. Dans l'hypothèse d'un tel défaut simultané des deux barrières étanches, une double protection supplémentaire peut encore être prévue, à savoir, la fermeture d'une vanne à boisseau qui sectionne la fibre optique reliée à la sonde de mesure et assure l'étanchéité du piquage dans l'enceinte, ainsi que la fermeture (après avoir enlevé la fibre optique sectionnée) d'une seconde vanne à boisseau installée en série avec la première dans le but d'assurer une sécurité supplémentaire d'étanchéité totale du piquage de l'enceinte.

Le dispositif selon l'invention peut être adapté au contrôle de la qualité de latex de polymères vinyliques halogénés en émulsion aqueuse dans n'importe quel réacteur de polymérisation usuellement utilisé pour la polymérisation en émulsion aqueuse de tels monomères. Ces réacteurs sont généralement pourvus de moyens pour l'introduction des réactifs et pour le déchargement du latex de polymère, d'un agitateur et d'une double enveloppe pour l'évacuation de la chaleur de polymérisation.

Les exemples qui suivent sont destinés à illustrer le procédé et le dispositif selon l'invention.

Ils concernent l'homopolymérisation en émulsion aqueuse du chlorure de vinyle pour produire un latex de polychlorure de vinyle en contrôlant directement dans le réacteur l'évolution de la teneur totale en matières sèches du latex de polychlorure de vinyle et du diamètre moyen des particules polymériques au cours du déroulement de la polymérisation.

Les mesures de la réflectance dans la bande spectrale située entre 1100 et 2500 nm aux longueurs d'onde spécifiquement corrélées avec ces deux propriétés d'un latex d'homopolymère du chlorure de vinyle (fournies plus haut) s'effectuent toutes les deux minutes à partir du remplissage initial jusqu'à la fin de la réaction de polymérisation et le dégazage du chlorure de vinyle résiduaire.

Les exemples sont réalisés dans un réacteur de laboratoire d'une contenance de 6,6 litres, muni d'une double enveloppe dans laquelle circule un fluide caloporteur et d'un agitateur à pales conventionnel en acier inoxydable. Le réacteur est par ailleurs pourvu d'une sonde de mesure dans la région du proche intrarouge (NIR) fixée hermétiquement au travers de la double enveloppe avec sa fenêtre de mesure disposée au ras de la paroi du réacteur. Cette sonde est située dans le fond du réacteur en dessous du niveau de remplissage initial. Les équations de corrélation et le calculateur sont incorporés dans un ordinateur relié au spectrophotomètre.

### Exemple 1

Cet exemple concerne le contrôle de la teneur totale en matières sèches et du diamètre moyen des particules au cours de la polymérisation en émulsion aqueuse non micellaire du chlorure de vinyle pour produire un latex monomodal, constitué d'une seule famille de particules, dont le diamètre moyen final s'élève à environ 300 nm. Par polymérisation en émulsion aqueuse non micellaire, on entend désigner la polymérisation en présence d'une quantité d'émulsionnant dont la concentration ne dépasse à aucun moment la concentration micellaire critique de l'émulsionnant.

On introduit successivement dans le réacteur à température ambiante 2675 g d'eau déminéralisée et 0,0075 g de sulfate de cuivre, 5aq. (soit 7,5 cm³ d'une solution à 1 g/l). On ferme le réacteur et on met l'agitateur en marche à 225 t/min. On porte la température du contenu du réacteur à 30 °C. Une fois celle-ci stabilisée, on fait deux fois le vide (à 180 mm de mercure absolus) et, entre les deux opérations, on balaie le réacteur à l'azote technique à la pression de 600 mm de mercure absolus. On introduit ensuite 2180 g de chlorure de vinyle et on porte progressivement la température du contenu du réacteur à 51 °C. Au moment où on atteint 51 °C, on introduit 1,30 g de persulfate d'ammonium (soit 26 cm³ d'une solution à 50 g/l). Six minutes plus tard, on introduit 2,16 g d'ammoniac (soit 16cm³ d'une solution à 135 g/l). Ce moment est considéré comme le temps zéro de la polymérisation (t0).
Entre t0 + 0h30min et t0 + 4h15min, on introduit progressivement 21,8 g d'acide myristique (sous forme de sel d'ammonium) (soit 242cm³ d'une solution à 90 g/kg d'acide myristique).
Après une chute de pression de 2 bars, on porte la température à 80 °C. On réduit la vitesse d'agitation à 50 t/min et on élimine le chlorure de vinyle résiduaire par dégazage et stripping sous ébullition.

A titre de contrôle des valeurs obtenues à partir des mesures de réflectance, on prélève à partir de t0 + 0h30min et à intervalles réguliers d'environ 30 minutes un échantillon de latex de polychlorure de vinyle. Les échantillons prélevés sont débarrassés du chlorure de vinyle résiduaire par dégazage et stripping sous ébullition.
Sur ces échantillons, on détermine la teneur en matières sèches (par densitométrie) et le diamètre moyen des particules par photosédimentométrie.

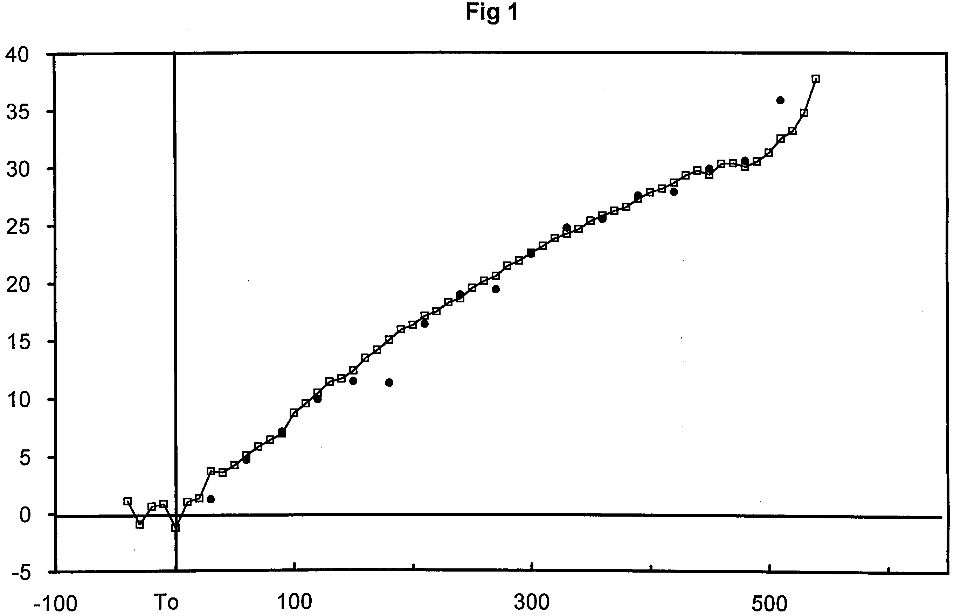

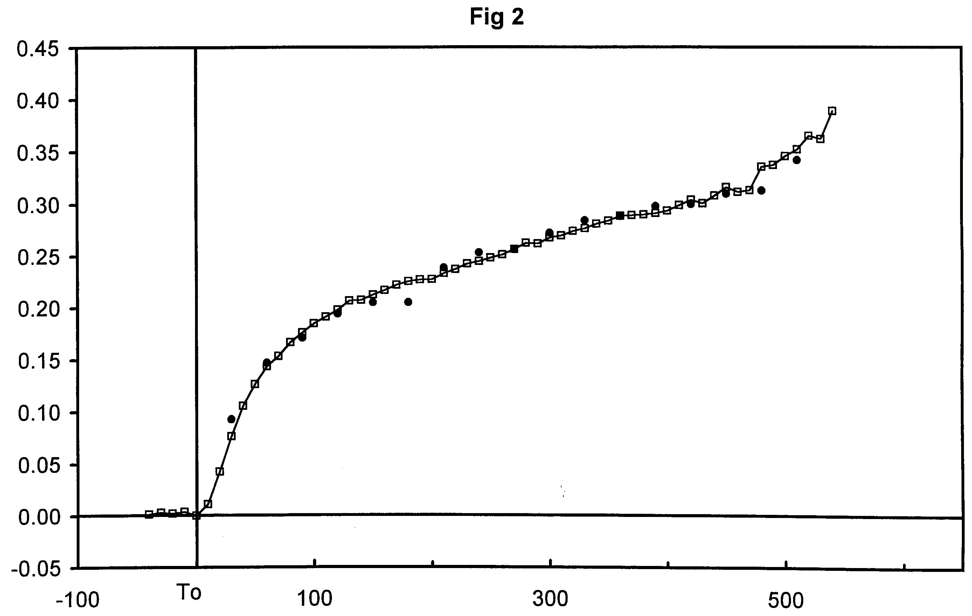

Dans la figure 1, en annexe, on a porté en ordonnée la teneur totale en matières sèches du latex contrôlé, exprimée en %. Dans la figure 2, en annexe, on a porté en ordonnée le diamètre moyen des particules exprimé en micromètres (µm). Dans les figures 1 et 2, on a porté en abscisse le temps, exprimé en minutes, compté à partir de to.
Dans ces figures, les carrés vides correspondent aux mesures effectuées toutes les deux minutes selon le procédé de l'invention et les ronds pleins aux mesures effectuées toutes les 30 minutes sur des échantillons prélevés en cours de polymérisation.

### Exemple 2

Cet exemple concerne le contrôle de la teneur totale en matières sèches et du diamètre moyen des particules au cours de la polymérisation en émulsion aqueuse ensemencée non micellaire du chlorure de vinyle pour produire un latex monomodal, constitué d'une seule famille de particules, dont le diamètre moyen final s'élève à environ 600 nm.

On introduit successivement dans le réacteur 2520 g d'eau, 0,0070 g de sulfate de cuivre, 5aq (soit 7 g d'une solution à 1 g/l) et 295 g de polychlorure de vinyle sous la forme du latex produit à l'exemple 1. On ferme le réacteur et on met l'agitateur en marche. A partir de ce moment, on reprend intégralement la procédure de l'exemple 1, si ce n'est que la quantité des ingrédients (exprimée en g) mis en oeuvre est la suivante :

| | |
|---|---|
| chlorure de vinyle | 1975,00 |
| persulfate d'ammonium | 0,70 |
| ammoniac | 2,00 |
| acide myristique (sous forme de sel) | 11,80 |

Comme dans l'exemple 1, on mesure directement dans l'émulsion aqueuse via la sonde toutes les deux minutes la valeur de la réflectance aux longueurs d'onde précitées et on prélève par ailleurs régulièrement toutes les 30 minutes des échantillons de latex qui après dégazage sont analysés à titre de contrôle.

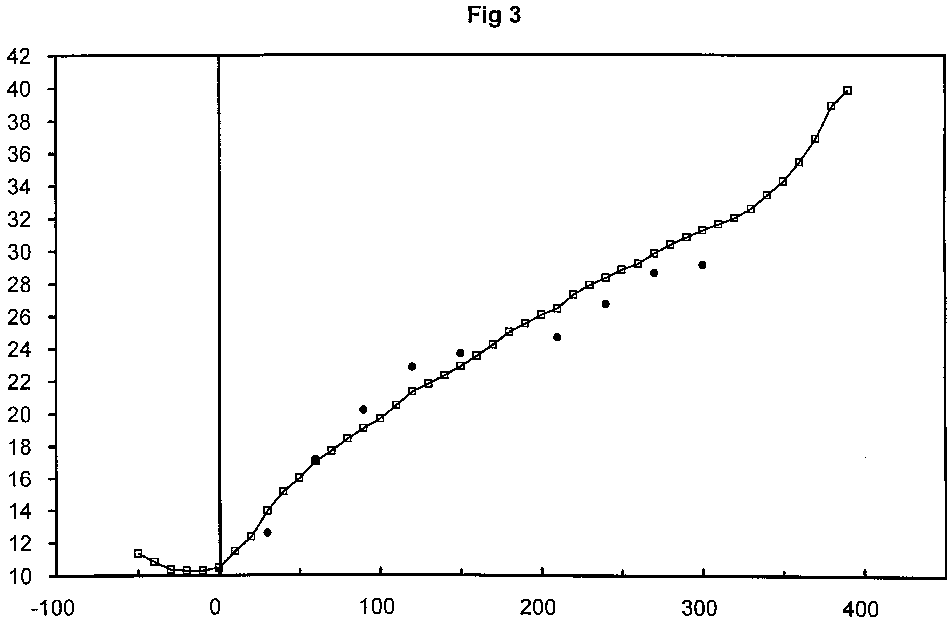

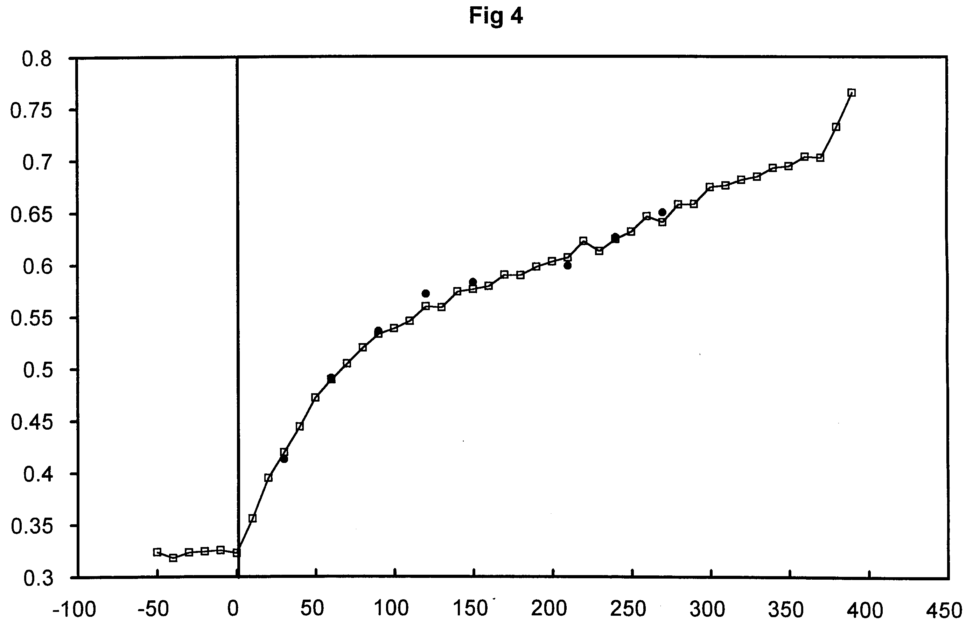

Les résultats des mesures sont reprises aux figures 3 et 4, en annexe, dans lesquelles les abscisses présentent également le temps, exprimé en minutes, compté à partir de to. Dans la figure 3, on a porté en ordonnée la teneur totale en matières sèches du latex contrôlé, exprimée en % et dans la figure 4 le diamètre moyen des particules exprimé en µm.

La comparaison des résultats représentés dans les figures 1 à 4 atteste de la fiabilité et de la reproductibilité de la méthode de contrôle de la qualité de latex selon l'invention.

## Revendications

1. Procédé de contrôle de la qualité de latex de polymères vinyliques halogénés en cours de polymérisation radicalaire en émulsion aqueuse de monomères vinyliques halogénés, caractérisé en ce qu'on émet dans l'émulsion aqueuse un rayonnement lumineux, on capte et on transmet à un spectrophotomètre proche infrarouge la lumière diffuse réfléchie par les particules polymériques du latex dans la bande spectrale située entre 1100 et 2500 nm, on mesure la lumière diffuse réfléchie à certaines longueurs d'onde spécifiques situées dans cette bande spectrale et corrélées avec des propriétés spécifiques du latex à l'aide d'équations de corrélation stockées dans une mémoire, on introduit les valeurs mesurées dans ladite mémoire et on calcule la propriété spécifique contrôlée.

2. Procédé de contrôle suivant la revendication 1, caractérisé en ce que le contrôle de la qualité du latex de polymère vinylique halogéné s'effectue sur un échantillon d'émulsion aqueuse prélevé dans le réacteur en cours de polymérisation.

3. Procédé de contrôle suivant la revendication 1, caractérisé en ce que le contrôle de la qualité du latex s'effectue sur l'émulsion aqueuse directement dans le réacteur de polymérisation.

4. Procédé de contrôle suivant l'une quelconque des revendications 1 à 3, caractérisé en ce qu'il est appliqué au contrôle de la qualité de latex de polymères de monomères vinyliques halogénés choisis parmi le chlorure de vinyle, le chlorure de vinylidène et le fluorure de vinylidène.

5. Procédé suivant la revendication 4, caractérisé en ce que les polymères de monomères vinyliques halogénés sont choisis parmi les homopolymères du chlorure de vinyle, les copolymères du chlorure de vinylidène et les homopolymères et copolymères du fluorure de vinylidène.

6. Procédé de contrôle suivant l'une quelconque des revendications 1 à 5, caractérisé en ce qu'il est appliqué à la polymérisation radicalaire en émulsion aqueuse en présence d'agents émulsionnants et d'initiateurs radicalaires hydrosolubles.

7. Dispositif pour le contrôle de la qualité de latex de polymères vinyliques halogénés dans un réacteur en cours de polymérisation en émulsion aqueuse, caractérisé en ce qu'il comprend essentiellement une sonde de mesure disposée dans le réacteur, une liaison optique entre ladite sonde et un spectrophotomètre proche infra-rouge situé à l'extérieur du réacteur, ledit spectrophotomètre étant pourvu de moyens pour émettre un rayonnement lumineux et pour capter la lumière diffuse réfléchie dans la bande spectrale située entre 1100 et 2500 nm et un ordinateur ayant en mémoire les équations établissant une corrélation entre la valeur de la lumière diffuse réfléchie à des longueurs d'onde spécifiques et des propriétés spécifiques du latex.

8. Dispositif suivant la revendication 7, caractérisé en ce que la liaison optique entre la sonde de mesure et le spectrophotomètre proche infrarouge se fait au moyen de fibres optiques.

9. Dispositif suivant les revendications 7 ou 8, caractérisé en ce que la sonde est disposée dans le fond du réacteur au-dessus de l'agitateur.

10. Dispositif suivant les revendications 7 à 9, caractérisé en ce que la sonde est pourvue d'une première barrière étanche côté réacteur et d'une seconde barrière étanche côté extérieur et en ce que l'intérieur de la sonde est maintenu sous une pression fixée d'un gaz neutre.
